Europäisches Patentamt

European Patent Office

Office européen des brevets

(19)

(11) Publication number: **0 275 251 B1**

## EUROPEAN PATENT SPECIFICATION

(12)

(45) Date of publication of patent specification: 24.06.92

(51) Int. Cl.5: **H02K 1/16**, H02K 19/34, H02K 11/00

(21) Application number: **86904299.4**

(22) Date of filing: **16.07.86**

(86) International application number:
**PCT/GB86/00414**

(87) International publication number:
**WO 87/00703 (29.01.87 87/03)**

(54) **ALTERNATOR ASSEMBLY.**

(30) Priority: **16.07.85 GB 8517882**

(43) Date of publication of application:
**27.07.88 Bulletin 88/30**

(45) Publication of the grant of the patent:
**24.06.92 Bulletin 92/26**

(84) Designated Contracting States:
**AT BE CH DE FR GB IT LI LU NL SE**

(56) References cited:
DE-A- 2 632 361     FR-A- 2 513 451
GB-A- 2 120 865     US-A- 2 303 291
US-A- 3 160 772     US-A- 3 225 424

**See also references of WO8700703**

(73) Proprietor: **Cooper, Lynda Marie**
**7 Chapel Street Brownhills**
**Walsall, West Midlands WS8 7NS(GB)**

(72) Inventor: **Cooper, Lynda Marie**
**7 Chapel Street Brownhills**
**Walsall, West Midlands WS8 7NS(GB)**

(74) Representative: **Adkins, Michael et al**
**Withers & Rogers 4 Dyer's Buildings Holborn**
**London EC1N 2JT(GB)**

EP 0 275 251 B1

## Description

This invention relates to an alternator assembly, and in particular to an alternator assembly for use on a vehicle.

In my prior United Kingdom application GB-A-2120865 I disclosed an alternator assembly capable of generating high currents (high current alternator); the assembly being particularly suited to generating gas from water by electrolysis to assist in powering the vehicle, as set out in my prior United Kingdom application GB-A-2120865. I have now provided an alternator assembly of simplified form effective for the purpose specified, though it may also have other applications.

As is well known, alternating current may be produced by cutting lines of magnetic force, in a generator by a coil rotating inside stationary magnetic pole pieces, and in an alternator by magnetic pole pieces (rotor) rotating inside stationary coil(s) (stator). Whilst the magnets can be permanent magnets, for alternators more usually they are electromagnets excited by a winding wound co-axially with the rotor shaft and energised via slip or collector rings mounted on the shaft and carbon brushes mounted on the stator and shield, the excitation current for the generation of the magnetic field being tapped from the stator winding; excitation of the rotor is initiated from standstill by the effect of residual magnetism in the iron core assisted by current drawn from the battery by way of the ignition switch. To reduce the maintenance requirement it is however known to replace the carbon brushes and collector rings for the alternator by a special exciter which is itself a miniature alternator having a rotating three-phase winding and stationary excitation winding.

In conventional alternators, the rotor has a single winding co-axial with the shaft and embraced by two claw-shaped iron pole pieces to form a multi-pole rotating magnetic rotor with North poles derived from one end of the winding and South poles derived from the other. To obtain maximum output from a given weight it is common practice to use a claw pole rotor with 12 poles and a three-phase stator winding.

In my earlier application GB-A-2120865 I disclosed rotor windings wound on a bobbin, the innermost winding on the bobbin being close to the axis of the rotor such that an increased number of turns can be wound on the bobbin for a given rotor diameter; conveniently the bobbin has a radial thickness of less than 2mm, preferably less than 1.6mm.

According to one aspect of the invention, there is provided an alternator assembly comprising a rotor winding and two stator windings, one of the stator windings being wound in the opposite sense to the other, characterised by including a substantially non-magnetic former having slots or the like in which the stator windings are provided.

The two stator windings may be wound in the same slots in the former.

It is the common practice to position the stator coils in inwardly-facing slots around a laminated iron stator core. However in my invention any slots are outwardly facing. Thus according to my invention I provide an alternator assembly having a rotor winding and a stator winding and an associated current rectifier the stator winding being located in slots in a core characterised in that the slots are outwardly facing.

Furthermore, in each slot there are lengths of two separate windings of different diameter wire, conveniently the radially inner being copper wire of diameter 1.65mm and the radially outer wire being of diameter 2.16mm, as disclosed in my earlier application GB-A-2120865 one of the windings is wound in one sense and the other in the opposite sense. Whilst it is known in armature windings to provide double-layer "drum windings", the coils are kinked so that one side of a coil occupies the outer half of a slot and the other side occupies the inner half of another slot; this is to permit easier assembly of standard shaped coils, and also to assist retention when the armature rotates. However in the known drum windings of which I am aware the outer "length" is not of different diameter to the inner "length", nor are these "lengths" sections of different windings. In general single-layer winding is employed where the machine has a large number of conductors per slot, whereas the double-layer winding is generally more convenient where the numbers of conductors per slot does not exceed 8; it is a feature of my invention that I provide two sets of single-layer stator windings, the outer winding being of larger diameter wire than the inner.

It is becoming increasingly common practice to use a so-called vehicle alternator to charge the vehicle battery. The vehicle battery is subjected to ever-increasing loads as more sophisticated electrical equipment is developed; the output characteristics of an alternator of starting to supply current at lower engine speeds so that the power requirements of a vehicle can be met even when the engine is idling, and of rapid charging so maintaining or reducing the required battery capacity, have therefore increasingly been recognised as advantageous over the use for instance of a D.C. generator or dynamo with its electromagnetic regulator and cut-out relay.

According to a preferred feature of my invention I provide an alternator assembly comprising a vehicle alternator and a high current alternator, the alternators having a common rotor shaft. The shaft will thus be longer than the conventional shaft used when there is only a vehicle alternator.

A high current alternator (in excess of 85 amps) has previously been proposed for special vehicles with very high current demands. The rotor design proposed used however four or six radially disposed single poles, each pole having its own excitation winding, instead of the one common excitation winding for all the poles as in the claw pole design. This known design has a built-in fan, and diodes externally mounted in a separate water-cooled rectifier housing. But water cooling is difficult to arrange, and likely to be ineffective if the water circulation fails or the water leaks.

Thus according to yet a further feature of my invention I propose an externally mounted rectifier housing, and a built-in fan to supply cooling air to the rectifier housing. Preferably the fan has a plurality of separate rotatable blades, the tip of each blade being of larger diameter than the alternator; though in an alternative arrangement, the blades could be of the conventional smaller diameter than the alternator but with ducting to direct air to the rectifier housing. If the high current alternator is separated from the fan by the vehicle alternator, I would also propose ducting, as from the larger diameter fan.

My invention will now be further described by way of example with reference to the accompanying drawings, in which :

Fig. 1 is an axial cross-section through an alternator assembly according to the invention;

Fig. 2 is a plan view of part of the rotors of the separate alternators of the alternator assembly of Fig. 1;

Fig. 3 is a developed schematic view of part of a stator winding;

Fig. 4 is a view of part of the stator according to the invention showing the double-layer winding;

Fig. 5 is a graph illustrating a typical current output from an alternator assembly according to the invention;

Fig. 6 is a diagramatic view of a supply system for powering an engine of a motor vehicle by gas derived from water.

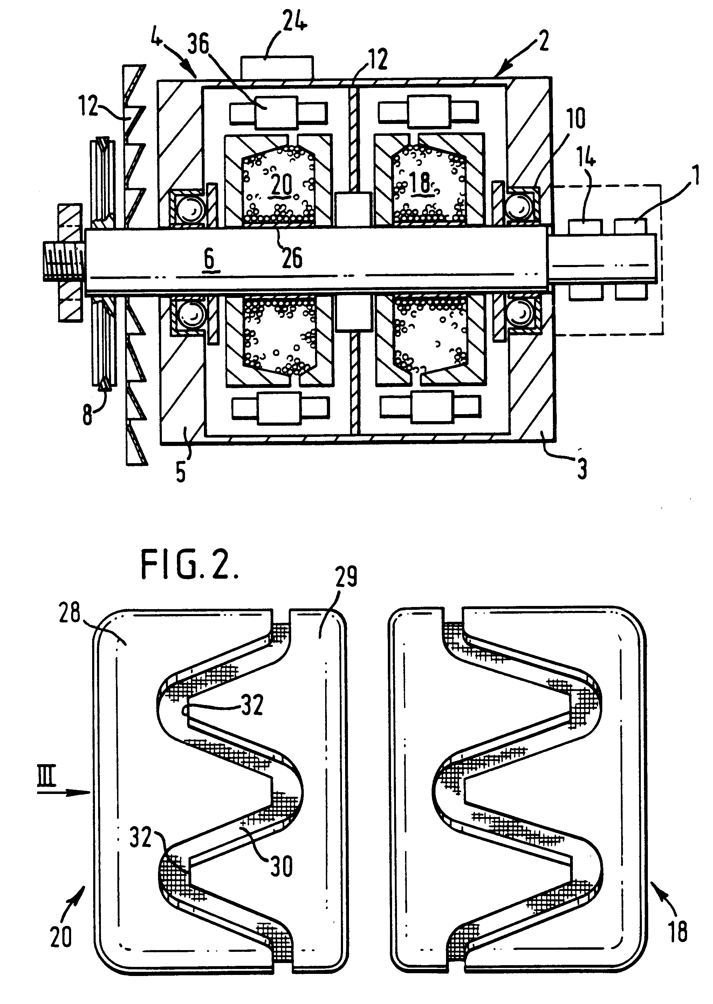

In Figure 1, the vehicle alternator 2 in casing 3 is positioned back to back with a high current alternator 4 in casing 5, the alternators sharing a common drive shaft 6. Shaft 6 is driven by the engine (not shown) by way of pulley wheel 8, and is journalled for rotation in bearings 10, mounted in the ends of the alternator casings. The vehicle alternator 2 can if desired be the one positioned adjacent to pulley 8.

Whilst the alternators are shown separated by a single wall 12, in alternative embodiments they could be separated by their respective end walls, or be in a single casing with bearings 10 at opposite ends.

Slip rings 14,16 positioned around drive shaft 6 to supply exciter current to rotor windings 18 of the vehicle alternator 2.

Drive shaft 6 has a diameter of 20.00 mm and carries a bobbin 26 having a radial thickness of 1.6mm, the inner layer of the rotor windings 20 of the high current alternator 4 thus being positioned close to the rotor axis, so as to allow a larger number of rotor turns to be provided than when using a conventional bobbin of radial thickness 25mm or above.

Conveniently I provide 420 turns of 17 swg copper wire, but in alternative embodiments I can provide a different diameter shaft, different thickness bobbin and a different number of turns at a different radial spacing from the axis in accordance with the high current alternator 4 output characteristic required.

As seen in Figure 2, the rotor windings 20 are enclosed by pole pieces 28,29 of claw-form set to intercalate to provide a substantially sinusoidal wave form 30, the claws having flattened peaks 32 since this has been found to increase the available field at the periphery of the rotor. Rotor windings 20 are connected to a vertical slip ring (not shown), inside casing 5, and are thereby connected to brushes fed by the battery. If required the vertical slip ring and brushes can however be in the separating wall 12 of a common casing, or in the end wall of casing 3 so that the battery leads for the exciter currents to both alternators can be more positioned adjacent one to the other and thereby more readily serviced.

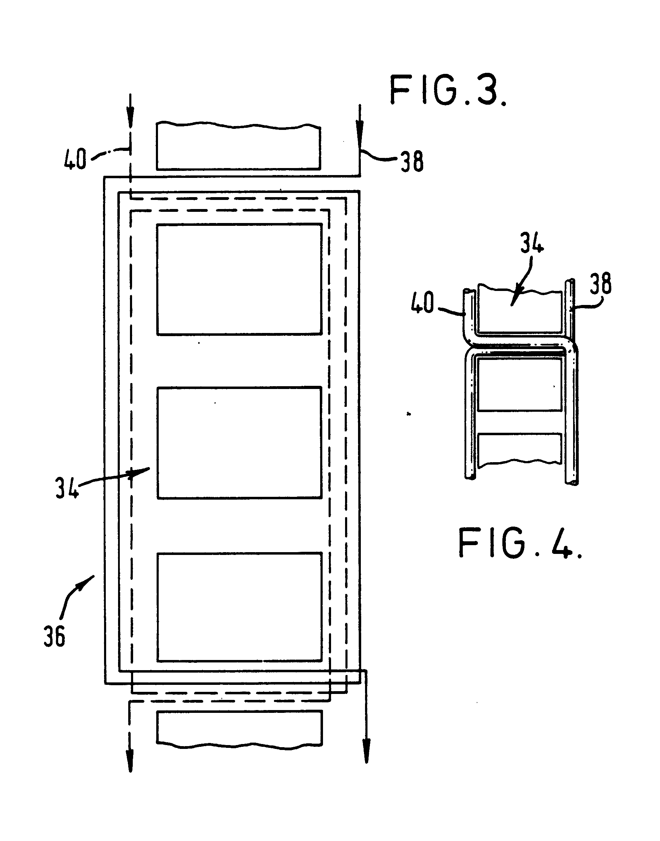

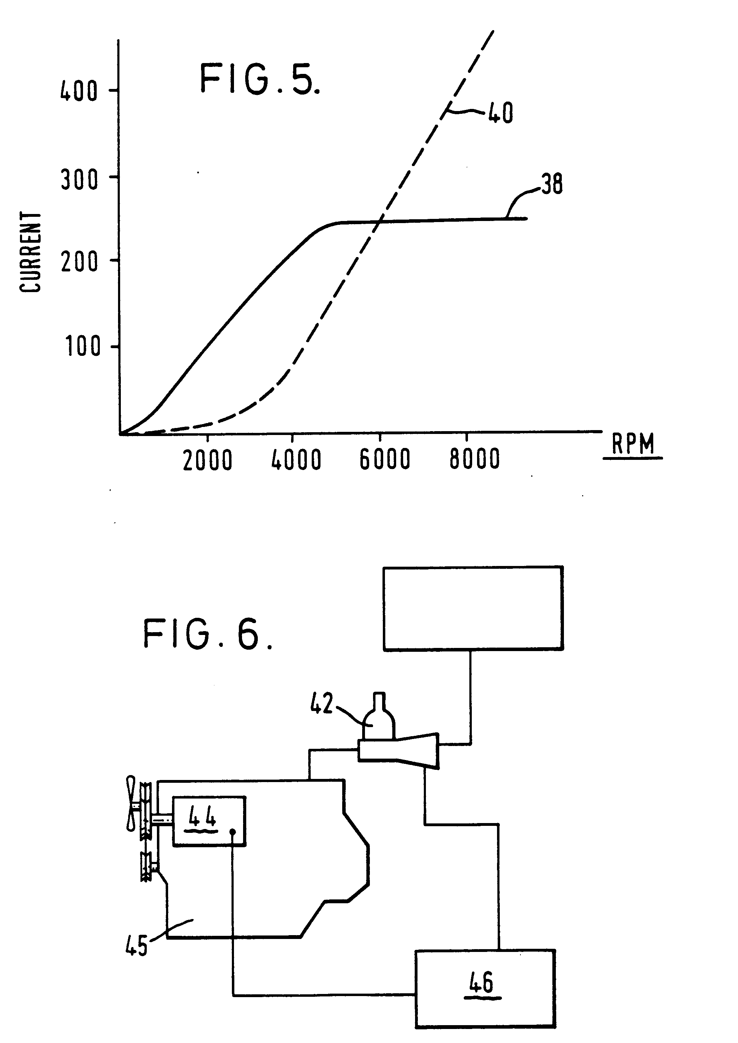

Rotor windings 20 are associated with a double wound stator 36, having a pair of windings 38,40 (Fig. 3, Fig.4) wound on former 34 axially slotted to receive the windings, the radially outer stator windings 40 being of larger diameter wire; windings 38,40 are connected to rectifier units 24 from which the rectified(D.C.) output can be taken, as to an electrolysis unit as hereinafter illustrated schematically in Fig. 6. The double stator windings 38,40 are oppositely wound. One of the windings 38,40 starts to produce current at low shaft 6 rotational speeds; the other of the windings at a higher shaft 6 rotational speed, as indicated on Fig. 5; these characteristics can be varied as by appropriate design. the stator windings 38,40 have at least three windings per phase using the same phase slot, so as to produce two peak outputs but of opposite polarity; the windings are so connected that the outputs add together.

The rectifier units for the high current alternator are mounted externally of the housing 5, so that they are in the vehicle air stream and so can be cooled. As seen in Fig. 1, I provide a larger diameter fan 12 to increase the flow of air over rectifier units 24; and ducting (not shown) can also be provided to direct additional air over the rectifier units, from fan 12 or from the ambient air whilst the vehicle is in motion, or both. I have found that such air cooling of externally mounted rectifier units is more reliable than the known water cooling.

A typical output from the high current alternator 4 is shown in Figure 5, where the solid line represents the output from winding 38 and the dotted line represents the output from winding 40.

A current of 400 + Amps at 2½ volts (although higher currents are possible with alternators according to my invention) will produce large volumes of hydrogen and oxygen by electrolysis of water which can be fed as in Figure 6 to the carburettor 42 of an internal combustion engine 45 and thereby reduce the amount of liquid fuel required. The gas is produced in an electrolysis unit 46 by current from the high current alternator 44; since the high current alternator 44 permits sufficient gas to be produced to meet the instantaneous demand, it is not necessary to store any gas, or to transport it on the vehicle with the attendant risk of explosion.

A feature of my alternator assembly is the use of separate stator windings of different cross-sectional area, the greater the cross-sectional area the shorter the aggregate length of the winding. Thus one winding may be of 1.65mm diameter wire and using for each phase an 8 metre length, so requiring about 24 metres; whereas a second winding may be of 2.16mm diameter wire and using for each phase a 5 metre length, so requiring about 15 metres. Preferably the largest cross-section stator winding is outermost, but this is not essential.

Normally the stator windings are of iron, and laminated. I have found that a non-magnetic plastics material such as polyethylene or nylon, of minimum wall thickness to permit the windings to be located around the stator in separate slots, allows the required alternator output current characteristics.

I have found that successively larger cross-sectional area windings each begin to make an effective contribution to the current output at respective higher rotor speeds, perhaps as the smaller cross-sectional windings become saturated, so allowing a rapidly increasing current output with rotor speed. Thus I select the number of windings and their respective cross-sectional areas in dependence on the output characteristic required.

## Claims

1. An alternator assembly comprising a rotor winding (20) and two stator windings (38,40), one of the stator windings being wound in the opposite sense to the other, characterised by including a substantially non-magnetic former having slots or the like in which the stator windings are provided.

2. An alternator assembly as claimed in claim 1, wherein the two stator windings (38,40) are wound in the same slots in the former.

3. An alternator assembly as claimed in claim 2, wherein the former slots are outwardly facing in relation to the former (34).

4. An alternator assembly as claimed in any preceding claim wherein a second two stator windings (38,40) are provided, one of the second stator windings being wound in the opposite sense to the other and the second two stator windings comprising a different diameter wire to the first two stator windings.

5. An alternator assembly as claimed in claim 4, wherein there are more turns in the one of the first and second stator windings which comprises smaller diameter wire.

6. An alternator assembly as claimed in claim 4 or claim 5 wherein least one further set of stator windings is provided.

7. An alternator assembly as claimed in any preceding claim, wherein each stator winding (38,40) is arranged to provide three-phase output.

8. An alternator assembly as claimed in claim 7, wherein each stator winding (38,40) is delta interconnected.

9. An alternator assembly as claimed in any preceding claim, wherein the alternator assembly includes two magnetic claw parts (28,29) between which the rotor winding (20) is held, the magnetic claw parts (28,29) including claw portions having ends (32), the claw portions extending axially over the rotor winding and intercalating at their ends.

10. An alternator assembly as claimed in claim 9, wherein the ends (32) of the claw portions are squared off.

11. An alternator assembly as claimed in any preceding claim, wherein the alternator assembly has an output from each stator winding (38,40) and a rectifier (24) is provided in each output.

12. An alternator assembly as claimed in claim 11, wherein the alternator assembly includes a main body (5) and the rectifiers (24) are mounted externally of the main body of the alternator for cooling by air convection and radiation.

13. An alternator assembly as claimed in claim 12, wherein the rectifiers (24) are in the air stream in use of a fan (12).

14. An alternator assembly as claimed in claim 13, wherein the fan (12) is arranged to be driven from the same source as the rotor winding (20).

15. An alternator assembly as claimed in claim 14, wherein the rectifiers (24) are mounted on the body (5) of the alternator and the fan (12) is rotatable about the same axis as the rotor winding and is of a larger diameter than the alternator body (5) so as to direct air over the rectifiers (24).

16. An alternator assembly as claimed in claim 14, wherein the fan is of a smaller diameter than the alternator body (5) and ducting is provided to direct air to the rectifiers (24).

17. The combination of an alternator assembly as claimed in any preceding claim and another alternator assembly, the alternator assemblies being mounted adjacently with their rotor windings arranged to rotate about a common axis.

18. An alternator assembly as claimed in any of claims 1 to 16 or a combination of alternator assemblies as claimed in claim 17, wherein the or each alternator assembly has an output terminal from the or each stator winding and the output terminals are separately connected to different pairs of electrodes in an electrolysis unit (46).

19. An engine including an alternator assembly as claimed in any of claims 1 to 16, or 18 or a combination of alternator assemblies as claimed in claim 17 or 18.

20. A vehicle including an engine as claimed in claim 19.

**Revendications**

1. Agencement d'alternateur comprenant un enroulement de rotor (20) et deux enroulements de stator (38, 40), l'un des enroulements de stator étant bobiné dans le sens inverse de l'autre, caractérisé en ce qu'il comporte un gabarit pratiquement non magnétique qui présente des fentes ou similaires dans lesquelles se trouvent les enroulements.

2. Agencement d'alternateur selon la revendication 1, dans lequel les deux enroulements de stator (38, 40) sont bobinés dans les mêmes fentes du gabarit.

3. Agencement d'alternateur selon la revendication 2, dans lequel les fentes du gabarit sont orientées vers l'extérieur par rapport au gabarit.

4. Agencement d'alternateur selon l'une quelconque des revendications précédentes, dans lequel sont prévus deux seconds enroulements de stator (38, 40), l'un des seconds enroulements de stator étant bobiné en sens inverse de l'autre, et les deux seconds enroulements de stator comprenant un fil de diamètre différent par rapport aux deux premiers enroulements de stator.

5. Agencement d'alternateur selon la revendication 4, dans lequel celui des premiers et seconds enroulements de stator qui est en un fil de plus petit diamètre comporte davantage de spires.

6. Agencement d'alternateur selon la revendication 4 ou 5, dans lequel est prévu au moins un jeu supplémentaire d'enroulements de stator.

7. Agencement d'alternateur selon l'une quelconque des revendications précédentes, dans lequel chaque enroulement de stator (38, 40) est conçu pour fournir une sortie triphasée.

8. Agencement d'alternateur selon la revendication 7, dans lequel chaque enroulement de stator (38, 40) est relié en delta.

9. Agencement d'alternateur selon l'une quelconque des revendications précédentes, dans lequel l'agencement d'alternateur comprend deux éléments magnétiques formant griffe (28, 29) entre lesquels est maintenu l'enroulement de rotor (20), les éléments magnétiques formant griffes comprenant des parties de griffe qui présentent des extrémités (32), les parties de griffe s'étendant axialement au-dessus de l'enroulement de rotor et s'intercalant à leurs extrémités.

10. Agencement d'alternateur selon la revendication 9, dans lequel les extrémités (32) des parties de griffe sont carrées.

11. Agencement d'alternateur selon l'une quelconque des revendications précédentes, dans lequel l'agencement d'alternateur présente une sortie partant de chaque enroulement de stator (38, 40), et un redresseur (24) est prévu à chaque sortie.

12. Agencement d'alternateur selon la revendication 11, dans lequel l'agencement d'alternateur comprend un corps principal (5), et les redresseurs (24) sont montés à l'extérieur du corps principal de l'alternateur pour permettre leur refroidissement par convection d'air et rayonnement.

13. Agencement d'alternateur selon la revendication 12, dans lequel les redresseurs (24) sont placés dans le courant d'air d'un ventilateur (12) lors du fonctionnement de celui-ci.

14. Agencement d'alternateur selon la revendication 13, dans lequel le ventilateur (12) est conçu pour être entraîné par la même source d'entraînement que l'enroulement de rotor (20)..

15. Agencement d'alternateur selon la revendication 14, dans lequel les redresseurs (24) sont montés sur le corps (5) de l'alternateur, et le ventilateur (12) peut tourner autour du même axe que l'enroulement de rotor et présente un diamètre supérieur à celui du corps (5) de l'alternateur, de façon à diriger l'air au-dessus des redresseurs (24).

16. Agencement d'alternateur selon la revendication 14, dans lequel le ventilateur est d'un diamètre inférieur à celui du corps (5) de l'alternateur, et une canalisation est prévue pour diriger l'air vers les redresseurs (24).

17. Combinaison d'un agencement d'alternateur selon l 'une quelconque des revendications précédentes et d'un autre agencement d'alternateur, les agencements d'alternateur étant montés au voisinage l'un de l'autre avec leurs enroulements de rotor conçus pour tourner autour d'un axe commun.

18. Agencement d'alternateur selon l'une quelconque des revendications 1 à 16, ou combinaison d'agencements d'alternateur selon la revendication 17, dans lequel le ou chaque agencement d'alternateur présente une borne de sortie à partir du ou de chaque enroulement de stator et les bornes de sortie sont reliées de façon séparée à différentes paires d'électrodes d'un ensemble d'électrolyse (46).

19. Moteur comprenant un agencement d'alternateur selon l'une quelconque des revendications 1 à 16, ou 18, ou une combinaison d'agencements d'alternateur selon la revendication 17 ou 18.

20. Véhicule comprenant un moteur selon la revendication 19.

**Patentansprüche**

1. Wechselstromgeneratoranordnung enthaltend eine Rotorwicklung (20) und Zwei Statorwicklungen (38, 40), wobei eine der Statorwicklungen im entgegengesetzten Wicklungssinn zu anderen gewickelt ist, **gekennzeichnet durch** den Einsatz eines im wesentlichen nicht-magnetisches Formteiles, welches Einschnitte oder ähnliches aufweist, in denen die Statorwicklungen vorgesehen sind.

2. Wechselstromgeneratoranordnung nach Anspruch 1, in dem die zwei Statorwicklungen (38, 40) in den selben Einschnitten in dem Formteil gewickelt sind.

3. Wechselstromgeneratoranordnung nach Anspruch 2, in dem die Einschnitte des Formteiles bezüglich des Formteiles (34) außengestaltend sind.

4. Wechselstromgeneratoranordnung gemäß einem der vorhergehenden Ansprüche, in dem die zwei Statorwicklungen ein zweites Mal vorgesehen sind, wobei eine der zweiten Statorwicklungen im entgegengesetzten Wicklungssinn zur anderen gewickelt ist und die zweiten zwei Statorwicklungen Draht mit einem zum Draht der ersten zwei Statorwindungen verschiedenen Durchmesser enthalten.

5. Wechselstromgeneratoranordnung nach Anspruch 4, in dem in der einen der ersten und der zweiten Statorwicklung, die den Draht mit dem kleineren Querschnitt enthält, mehr Windungen enthalten sind.

6. Wechselstromgeneratoranordnung nach Anspruch 4 oder 5, in der mindestens ein weiterer Satz von Statorwicklungen vorgesehen ist.

7. Wechselstromgeneratoranordnung nach einem der vorhergehenden Ansprüche, in der jede Statorwicklung (38, 40) angeordnet ist, einen dreiphasigen Ausgang zu gewährleisten.

8. Wechselstromgeneratoranordnung nach Anspruch 7, in der jede Statorwicklung im Dreieck (38, 40) geschaltet ist.

9. Wechselstromgeneratoranordnung nach einem der vorhergehenden Ansprüche, in der die Wechselstromgeneratoranordnung zwei magnetische Klauenstücke (28, 29) enthält, zwischen denen die Rotorwicklung (20) gehalten ist, wobei die magnetischen Klauenstücke (28, 29) Klauenteile beinhalten, die Enden (32) aufweisen und die Klauenteile axial über die Rotorwicklung hinausstehen und ihre Enden zwischenlegen.

10. Wechselstromgeneratoranordnung nach Anspruch 9, in der die Enden (32) der Klauenteile abgeschnitten sind.

11. Wechselstromgeneratoranordnung nach einem der vorhergehenden Ansprüche, in der die die Wechselstromgeneratoranordnung einen Ausgang einer jeden Statorwicklung (38, 40) aufweist und ein Gleichrichter (24) an jedem Ausgang vorgesehen ist.

12. Wechselstromgeneratoranordnung nach Anspruch 11, in der die Wechselstromgeneratoranordnung einen Grundkörper (5) enthält und die Gleichrichter (24) außerhalb des Grundkörpers der Wechselstromgeneratoranordnung zur Kühlung durch die Luftkonvektion und -zirkulation befestigt sind.

13. Wechselstromgeneratoranordnung nach Anspruch 12, in der sich die Gleichrichter in dem Luftstrom unter Benutzung eines Lüfter (12) befinden.

14. Wechselstromgeneratoranordnung nach anspruch 13, in der der Lüfter (12) so angeordnet ist, daß er von derselben Quelle wie die Rotorwindung (20) angetrieben wird.

15. Wechselstromgeneratoranordnung nach Anspruch 14, in der die Gleichrichter (24) an dem Körper (5) des Wechselstromgenerators befestigt sind und der Lüfter (12) über dieselbe Achse wie die Rotorwicklung drehbar ist und einen größeren Durchmesser als der Wechselstromgeneratorkörper (5) aufweist, um Luft über die Gleichrichter (24) zu richten.

16. Wechselstromgeneratoranordnung nach Anspruch 14, in der der Lüfter einen kleineren Durchmesser als der Wechselstromgeneratorkörper (5) aufweist und eine Luftführung vorgesehen ist, um die Luft auf die Gleichrichter (24) zu richten.

17. Kombination einer Wechselstromgeneratoranordnung gemäß einem der vorhergehenden Ansprüche und einer anderen Wechselstromgeneratoranordnung, wobei die Wechselstromgeneratorbaugruppen mit ihren Rotorwicklungen benachbart angeordnet sind, um eine Drehung über eine gemeinsame Achse zu bewerkstelligen.

18. Wechselstromgeneratoranordnung nach einem der Ansprüche 1 bis 16 oder eine Kombination von Wechselstromgeneratoranordnungen nach Anspruch 17, in der die oder jede Wechselstromgeneratoranordnung eine Ausgangsklemme hat und die oder jede Statorwicklung und die Ausgangsklemmen getrennt mit verschiedenen Paaren von Elektroden in einer Elektrolyseeinheit (46) verbunden sind.

19. Maschine, die eine Wechselstromgeneratoranordnung nach einem der Ansprüche 1 bis 16 oder 18 oder eine Kombination von Wechselstromgeneratoranordnungen nach Anspruch 17 oder 18 enthält.

20. Fahrzeug, das eine Maschine nach Anspruch 19 enthält.

FIG.2.

FIG.3.

40

38

34

40

38

34

36

FIG.4.

FIG.5.

FIG.6.